(19) Europäisches Patentamt
European Patent Office
Office européen des brevets

(11) EP 0 691 364 B1

(12) EUROPÄISCHE PATENTSCHRIFT

(45) Veröffentlichungstag und Bekanntmachung des Hinweises auf die Patenterteilung:
**21.03.2001 Patentblatt 2001/12**

(51) Int Cl.[7]: **C08G 77/38**, C08L 69/00
// (C08L69/00, 83:06)

(21) Anmeldenummer: **95109934.0**

(22) Anmeldetag: **26.06.1995**

(54) **Epoxigruppen enthaltende Siloxane und ihre Mischungen mit Polycarbonaten**

Epoxy group containing siloxanes and their mixtures with polycarbonates

Siloxanes contenant des groupes époxydés et leurs mélanges avec des polycarbonates

(84) Benannte Vertragsstaaten:
**BE DE ES FR GB IT NL**

(30) Priorität: **08.07.1994 DE 4424105**

(43) Veröffentlichungstag der Anmeldung:
**10.01.1996 Patentblatt 1996/02**

(73) Patentinhaber: **BAYER AG**
**51368 Leverkusen (DE)**

(72) Erfinder:
- **Buekers, Josef**
**D-47807 Krefeld (DE)**
- **Bier, Peter, Dr.**
**D-47800 Krefeld (DE)**
- **Schlitte, Sabine, Dr.**
**D-40764 Langenfeld (DE)**
- **Eversheim, Hubertus**
**D-42929 Wermelskirchen (DE)**
- **Meier, Helmut-Martin, Dr.**
**D-40883 Ratingen (DE)**

(56) Entgegenhaltungen:
**EP-A- 0 281 681**
**EP-A- 0 468 305**
**EP-A- 0 505 869**
**EP-A- 0 620 242**
**US-A- 4 393 158**
**US-A- 5 292 827**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 691 364 B1

## Beschreibung

Gegenstand der Erfindung sind Epoxigruppen enthaltende Siloxane der Formel 1

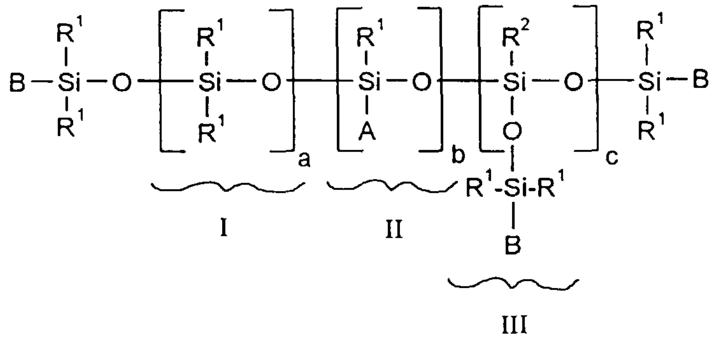

Formel 1

worin

A ein $C_1$-$C_{20}$-Alkylrest mit Epoxigruppen

B $R^1$ oder A

$R^1$, $R^2$ unabhängig voneinander $C_1$-$C_{20}$-Alkyl oder $C_6$-$C_{10}$-Aryl

a null oder eine ganze Zahl von 1-100

b null oder eine ganze Zahl von 1-100

c eine ganze Zahl von 1-5

bedeuten.

Bevorzugt sind mindestens 40 % der Siliciumatome mit einem Rest A substituiert und die Strukturelemente I, II und III sind imPolymerisat blockweise oder statistisch verteilt enthalten.

Besonders bevorzugte Siloxane der Formel 1 sind solche, in denen die allgemeinen Reste folgende Bedeutung haben:

1)

$R^1$, $R^2$ = unabhängig voneinander Methyl, Ethyl, Propyl, Butyl, Octyl, Isooctyl, 2-Ethylhexyl, Phenyl, Naphthyl,

B = $R^1$ oder A,

a = 0 - 50,

b = 1 - 50,

c = 1 bis 5,

A = γ-Glycidoxypropyl, 4,5-Epoxypentyl, γ-Glycidoxybutyl, γ-Glycidoxyhexyl, γ-Glycidoxyoctyl, Glycidoxy-o,p-phenyl, 5,6-Epoxyhexyl, 7,8-Epoxyoctyl, 9,10-Epoxydecyl, β-3,4-(Epoxycyclohexyl)-ethyl, β-3,4-(Epoxycyclohexyl)-propyl,

2)

$R^1$ = $CH_3$

$R^2$ = $C_6H_5$

B = $R^1$

a = 0-25

b = 1-25

c = 1 - 5

A = γ-Glycidoxypropyl

3)

$R^1$, $R^2$ = unabhängig voneinander $CH_3$, $C_6H_5$

B = $R^1$

a = 0 - 25

b = 1 - 25

c = 1 - 5

A = γ-Glycidoxypropyl.

Diese Siloxane zeichnen sich durch geringe Flüchtigkeit aus und können durch Addition geeigneter Si-H-Siloxane an α,β-ungesättige Epoxiverbindungen hergestellt weden (Hydrolisierung).

Ebenfalls Gegenstand der Erfindung sind Mischungen aus aromatischen Polycarbonaten und diesen Siloxanen, die - bezogen auf Gesamtmischung 0,001 bis 2,5 Gew.-%, bevorzugt 0,005 bis 0,25 Gew.-% des Siloxans enthalten. Diese Mischungen können direkt in bekannter Weise über Schmelzcompoundierung oder Schmelzextrusion bei Temperaturen von 260°C bis 360°C hergestellt werden. Sie zeichnen sich durch hervorragende Eigenschaften in der Temperaturalterung wie geringe Vergilbung, geringer Transmissionsverlust sowie geringem Molekulargewichtsabbau aus.

Ferner ist die Hydrolysebeständigkeit verbessert.

Für die Mischungen geeignete Polycarbonate sind hochmolekulare, thermoplastische, aromatische Polycarbonate mit $\overline{M}_w$ (Gewichtsmittel des Molekulargewichts) von mindestens 10 000, vorzugsweise von 20 000 bis 300 000, bevorzugt solche, die bifunktionelle Carbonatstruktureinheiten der Formel (I) enthalten,

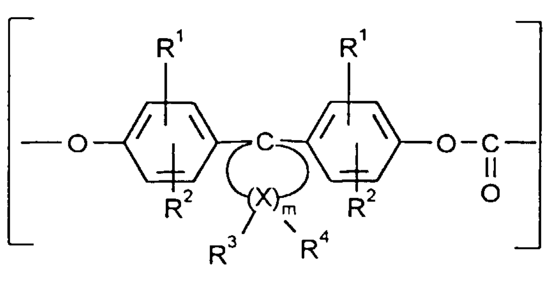

(I)

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4 bis 7, bevorzugt 4 oder 5,

$R^3$ und $R^4$ für jedes X individuell wählbar, unabhängig voneinander Wasserstoff oder $C_1$-$C_6$-Alkyl und

X Kohlenstoff bedeuten,

mit der Maßgabe, daß an mindestens einem Atom X, $R^3$ und $R^4$ gleichzeitig Alkyl bedeuten.

Ausgangsprodukte für die Polycarbonate A sind Dihydroxydiphenylcycloalkane der Formel (Ia)

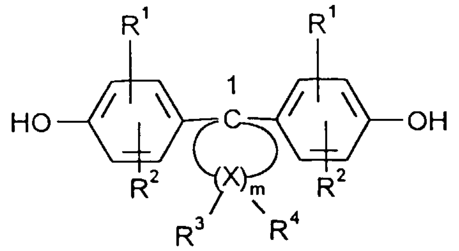 (Ia),

worin

X, $R^1$, $R^2$, $R^3$, $R^4$ und m die für die Formel (I) genannte Bedeutung haben.

Bevorzugt sind an 1-2 Atomen X, insbesondere nur an einem Atom X, $R^3$ und $R^4$ gleichzeitig Alkyl.

Bevorzugter Alkylrest ist Methyl; die X-Atome in $\alpha$-Stellung zu dem Diphenylsubstituierten C-Atom (C-1) sind bevorzugt nicht dialkylsubstituiert, dagegen ist die Alkyldisubstitution in $\beta$-Stellung zu C-1 bevorzugt.

Bevorzugt sind Dihydroxydiphenylcycloalkane mit 5 und 6 Ring-C-Atomen im cycloaliphatischen Rest (m = 4 oder 5 in Formel (Ia)), beispielsweise die Diphenole der Formeln (Ib) bis (Id),

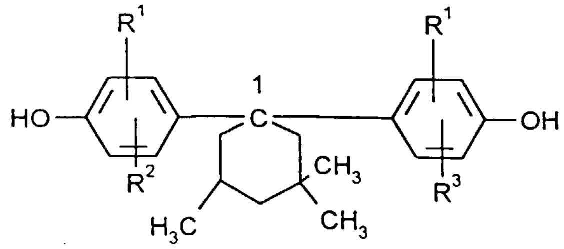 (Ib),

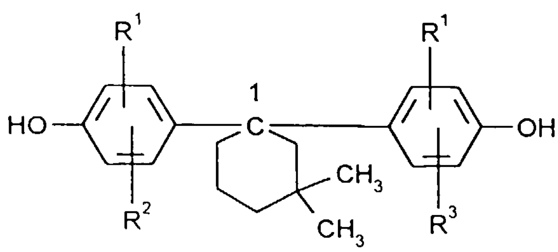 (Ic),

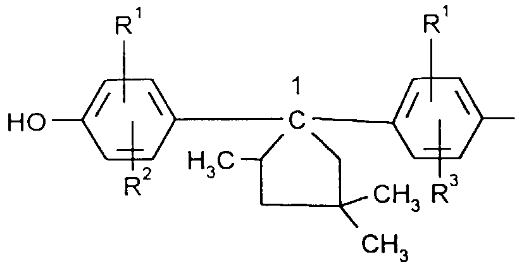 (Id),

wobei das 1,1-Bis-(4-hydroxyphenyl)-3,3,5-trimethylcyclohexan (Formel (Ib) mit $R^1$ und $R^2$ gleich H) besonders bevorzugt ist. Die Polycarbonate A können gemäß der deutschen Patentanmeldung P 3 832 396.6 (Le A 26 344) aus Diphenolen der Formel (Ia) hergestellt werden.

Es können sowohl ein Diphenol der Formel (Ia) unter Bildung von Homopolycarbonaten als auch mehrere Diphenole der Formel (Ia) unter Bildung von Copolycarbonaten verwendet werden.

Außerdem können die Diphenole der Formel (Ia) auch im Gemisch mit anderen Diphenolen, beispielsweise mit denen der Formel (Ie)

$$HO - Z - OH \qquad (Ie),$$

und auch Diphenole der Formel (Ie) alleine zur Herstellung von hochmolekularen, thermoplastischen, aromatischen Polycarbonaten verwendet werden.

Geeignete andere Diphenole der Formel (Ie) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (Ia) oder Heteroatome als Brückenglieder enthalten kann.

Beispiele der Diphenole der Formel (Ie) sind:
Hydrochinon, Resorcin, Dihydroxydiphenyle, Bi-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole sowie deren kernalkylierte und kernhalogenierte Verbindungen.

Diese und weitere geeignete Diphenole sind z.B. in den US-A 3 028 365, 2 999 835, 3 148 172, 3 275 601, 2 991 273, 3 271 367, 3 062 781, 2 970 131 und 2 999 846, in den DE-A 1 570 703, 2 063 050, 2 063 052, 2 211 956, der Fr-A 1 561 518 und in der Monographie "H. Schnell, Chemistry and Physics of Polycarbonates, Interscience Publishers, New York 1964", beschrieben.

Bevorzugte andere Diphenole sind beispielsweise:
4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, $\alpha,\alpha$-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan, $\alpha,\alpha$-Bis-(3,5-dimethyl-4-hydroxyphenyl)-p-diisopropylbenzol, 2,2-Bis-(3,5-dichlor-4-hydroxyphenyl)-propan und 2,2-Bis-(3,5-dibrom-4-hydroxyphenyl)-propan.

Besonders bevorzugte Diphenole der Formel (Ie) sind beispielsweise:
2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Insbesondere ist 2,2-Bis-(4-hydroxyphenyl)-propan bevorzugt. Die anderen Diphenole können sowohl einzeln als auch im Gemisch eingesetzt werden.

Wenn Diphenole der Formel (Ia) eingesetzt werden, ist das molare Verhältnis von Diphenolen der Formel (Ia) zu den gegebenenfalls mitzuverwendenden anderen Diphenolen der Formel (Ie) von 100 Mol-% (Ia) zu 0 Mol-% (Ie) bis 2 Mol-% (Ia) zu 98 Mol-% (Ie), vorzugsweise von 100 Mol-% (Ia) zu 0 Mol-% (Ie) bis 5 Mol% (Ia) zu 95 Mol-% (Ie) und insbesondere von 100 Mol-% (Ia) zu 0 Mol-% (Ie) bis 10 Mol-% (Ia) zu 90 Mol-% (Ie) und ganz besonders von 100 Mol-% (Ia) zu 0 Mol-% (Ie) bis 20 Mol-% (Ia) zu 80 Mol-% (Ie).

Die hochmolekularen Polycarbonate aus den Diphenolen der Formel (Ie) und/oder (Ia) können nach den bekannten Polycarbonat-Herstellungsverfahren hergestellt werden. Dabei können die verschiedenen Diphenole sowohl statistisch als auch blockweise miteinander verknüpft sein.

Die Polycarbonate können in an sich bekannter Weise verzweigt sein. Wenn die Verzweigung gewünscht wird, kann sich in bekannter Weise durch Einkondensieren geringer Mengen, vorzugsweise Mengen zwischen 0,05

und 2,0 Mol-% (bezogen auf eingesetzte Diphenole), an drei- oder mehr als dreifunktionellen Verbindungen, insbesondere solchen mit drei oder mehr als drei phenolischen Hydroxylgruppen, erreicht werden. Einige Verzweiger mit drei oder mehr als drei phenolischen Hydroxylgruppen sind:
Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1 -Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-is-(2-hydroxy-5-methyl-benzyl)-4-methylphenol, 2-(4-hydroxyphenyl)-2-(2,4-dihydroxyphenyl)-propan, Hexa-[4-(4-hydroxyphenyl-isopropyl)-phenyl]-orthoterephthalsäureester, Tetra-(4-hydroxyphenyl)-methan, Tetra-[4-(4-hydroxyphenyl-isopropyl)phenoxy]-methan und 1,4-Bis-[4',4"-dihydroxytriphenyl)-methyl]-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur an sich bekannten Regelung des Molekulargewichts der Polycarbonate A dienen monofunktionelle Verbindungen in üblichen Konzentraten. Geeignete Verbindungen sind z.B. Phenol, tert.-Butylphenole oder andere Alkyl-$C_1$-$C_7$-substituierte Phenole. Zur Regelung des Molekulargewichts sind insbesondere kleine Mengen Phenole der Formel (If) geeignet

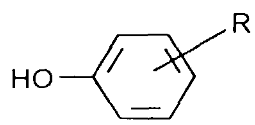 (If),

worin

R einen verzweigten $C_8$- und/oder $C_9$-Alkylrest darstellt.

Bevorzugt ist im Alkylrest R der Anteil an $CH_3$-Protonen zwischen 47 und 89 % und der Anteil der CH- und $CH_2$-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt.

Die Polycarbonate A können vorzugsweise nach dem Phasengrenzflächenverhalten (vgl. H. Schnell "Chemistry and Physics of Polycarbonates", Polymer Reviews, Vol. IX, Seite 33ff., Interscience Publ. 1964) in an sich bekannter Weise hergestellt werden.

Hierbei werden die Diphenole der Formel (Ie) und/oder (Ia) in wäßrig alkalischer Phase gelöst. Zur Regulierung des Molekulargewichts können Kettenabbrecher z.B. der Formel (If) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0°C und 40°C.

Die gegebenenfalls mitverwendeten Verzweiger (bevorzugt 0,05 bis 2,0 Mol-%) können entweder mit den Diphenolen in der wäßrig alkalischen Phase vorgelegt werden oder in dem organischen Lösungsmittel gelöst vor Phosgenierung zugegeben werden. Neben den Diphenolen der Formel (Ia) und/oder (Ie) können auch deren Mono- und/ oder Bis-chlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten; bei Mitverwendung von Chlorkohlensäureestern kann die Phosgenmenge in bekannter Weise entsprechend reduziert werden.

Geeignete organische Lösungsmittel für die Kettenabbrecher sowie gegebenenfalls für die Verzweiger und die Chlorkohlensäureester sind beispielsweise Methylenchlorid, Chlorbenzol, Aceton, Acetonitril sowie Mischungen dieser Lösungsmittel, insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wäßrige alkalische Phase dient beispielsweise NaOH-Lösung. Die Herstellung der Polycarbonate A nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen, eingesetzt werden. Die Katalysatoren können vor Beginn der Phosgenierung oder während oder auch nach der Phosgenierung zugesetzt werden.

Die Polycarbonate A können nach dem bekannten Verfahren in homogener Phase, dem sogenannten "Pyridinverfahren" sowie nach dem bekannten Schmelzeumesterungsverfahren unter Verwendung von beispielsweise Diphenylcarbonat anstelle von Phosgen hergestellt werden.

Die Polycarbonate A haben bevorzugt Molekulargewicht $\overline{M}_w$ (Gewichtsmittel, ermittelt durch Gelchromatographie nach vorheriger Eichung) von mindestens 2 000, besonders bevorzugt von 20 000 bis 300 000 und insbesondere von 20 000 bis 80 000. Sie können linear oder verzweigt sein, sie sind Homopolycarbonate oder Copolycarbonate auf Basis der Diphenole der Formel (Ie) und/oder (Ia).

Durch den Einbau der Diphenole der Formel (Ia) sind neue Polycarbonate mit hoher Wärmeformbeständigkeit entstanden, die auch sonst ein gutes Eigenschaftsbild haben. Dies gilt insbesondere für die Polycarbonate auf Basis der Diphenole der Formel (Ia), in denen m 4 oder 5 ist und ganz besonders für die Polycarbonate auf Basis der Diphenole (Ib), worin $R^1$ und $R^2$ unabhängig voneinander die für die Formel (Ia) genannte Bedeutung haben und besonders bevorzugt Wasserstoff sind.

Die besonders bevorzugten Polycarbonate A sind also solche, in denen Struktureinheiten der Formel (I) m = 4 oder 5 ist ganz besonders solche aus Einheiten der Formel (Ig)

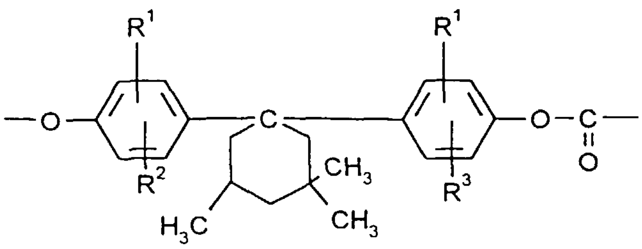

(Ig),

worin $R^1$ und $R^2$ die für Formel (I) genannte Bedeutung haben, besonders bevorzugt aber Wasserstoff sind.

Diese Polycarbonate auf Basis der Diphenole der Formel (Ib), worin insbesondere $R^1$ und $R^2$ Wasserstoff sind, besitzen zur hohen Wärmeformbeständigkeit außerdem eine gute UV-Stabilität und ein gutes Fließverhalten in der Schmelze, was nicht zu erwarten war.

Durch die beliebige Komposition mit anderen Diphenolen, insbesondere mit denen der Formel (Ie) lassen sich zudem die Polycarbonateigenschaften in günstiger Weise variieren. In solchen Copolycarbonaten sind die Diphenole der Formel (Ia) in Mengen von 100 Mol-% bis 2 Mol-%, vorzugsweise in Mengen von 100 Mol-% bis 5 Mol-% und insbesondere in Mengen von 100 Mol-% bis 10 Mol-% und ganz besonders von 100 Mol-% bis 20 Mol-%, bezogen auf die Gesamtmenge von 100 Mol-% an Diphenoleinheiten, in Polycarbonaten enthalten.

Diese Polycarbonate sind bekannt.

Herstellung geeigneter SiH-Siloxane:

**Beispiel 1**

In einem Kolben ausgerüstet mit Rührer, Rücklaufteiler,Rückflußkühler, Thermometer und $N_2$-Überlagerung werden 185 g (0,5 mol) $[(CH_3)_3SiO_{1/2}]_3[O_{3/2}SiC_6H_5]$, 490 g (0,25 mol) Trimethylsilyl-endgestopptes Methylhydrogenpolysiloxan mit einer durchschnittlichen Kettenlänge von 30 Methylhydrogensiloxyeinheiten, 0,7 g Schwefelsäure und 0,35 g Perfluorbutansulfonsäure vorgelegt und 4 Stunden bei 100°C gerührt. Es wird mit 2 g Ammoniumcarbonat neutralisiert und die oligomeren Siloxane werden bis 100°C im Wasserstrahlvakuum ausgeheizt. Nach Filtration erhält man ein Polysiloxan mit der aus dem $^1$H-NMR Spektrum berechnenten durchschnittlichen Zusammensetzung: $T^{Ph}(D^H)_{11}M_{3,3}$

**Beispiel 2**

In einem Kolben ausgerüstet mit Rührer, Rücklaufteiler, Rückflußkühler, Thermometer und $N_2$-Überlagerung werden 185 g (0,5 mol) $[(CH_3)_3SiO_{1/2}]_3[O_{3/2}SiC_6H_5]$, 98,1 g (0,05 mol) Trimethylsilyl-endgestopptes Methylhydrogenpolysiloxan mit einer durchschnittlichen Kettenlänge von 30 Methylhydrogensiloxyeinheiten, 0,7 g Schwefelsäure und 0,35 g Perfluorbutansulfonsäure vorgelegt und 4 Stunden bei 100°C gerührt. Es wird mit 2 g Ammoniumcarbonat neutralisiert und die oligomeren Siloxane werden bis 100°C im Wasserstrahlvakuum ausgeheizt. Nach Filtration erhält man ein Polysiloxan mit der aus dem $^1$H-NMR Sprektrum berechneten durchschnittlichen Zusammensetzung: $T^{Ph}(D^H)_{2,8}M_{2,3}$

**Beispiel 3**

In einem Kolben ausgerüstet mit Rührer, Rücklaufteiler, Thermometer und $N_2$-Überlagerung werden 291 g

(0,5 mol) $[(CH_3)_3SiO_{1/2}SiC_6H_5]_2$, 490 g (0,25 mol) Trimethylsilyl-endgestopptes Methylhydrogenpolysiloxan mit einer durchschnittlichen Kettenlänge von 30 Methylhydrogensiloxyeinheiten, 0,7 g Schwefelsäure und 0,35 g Perfluorbutansulfonsäure vorgelegt und 4 Stunden bei 100°C gerührt. Es wird mit 2 g Ammoniumcarbonat neutralisiert und die oligomeren Siloxane werden bis 100°C im Wasserstrahlvakuum ausgeheizt. Nach Filtration erhält man ein Polysiloxan mit der aus dem $^1$H-NMR Spektrum berechneten durchschnittlichen Zusammensetzung:
$(T^{Ph})_2(D^H)_{12,8}M_{3,6}$

**Beispiel 4**

In einem Kolben ausgerüstet mit Rührer, Rücklaufteiler, Rückflußkühler, Thermometer und $N_2$-Überlagerung werden 369 g (0,5 mol) $[(CH_3)_3SiO_{1/2}SiC_6H_5)_3$, 981 g (0,5 mol) Trimethylsilyl-endgestopptes Methylhydrogtenpolysiloxan mit einer durchschnittlichen Kettenlänge von 30 Methylhydrogensiloxyeinheiten, 1,4 g Schwefelsäure und 0,7 g Perfluorbutansulfonsäure vorgelegt und 4 Stunden bei 100°C gerührt, es wird mit 3,7 g Ammoniumcarbonat neutralisiert und die oligomeren Siloxane werden bis 100°C im Wasserstrahlvakuum ausgeheizt.

Nach Filtration erhält man ein Polysiloxan mit der aus dem $^1$-H-NMR Spektrum berechneten durchschnittlichen Zusammensetzung:
$(T^{Ph})_3(D^H)_{27}M_5$

Addition (Hydrosilylierung mit den Produkten der Beispiele 1-4)

In einem Kolben ausgerüstet mit Rührer, Rücklaufteiler, Rückflußkühler, Thermometer, Tropftrichter und $N_2$-Überlagerung werden pro mol umzusetzendes SiH 142 g (1,25 mol) Allylglycidether vorgelegt. Als Katalysator werden 50 ppm Platin bezogen auf die gesamte Reaktionsmischung als $H_2PtCl_6$ auf A-Kohle (Norite CN 1) als Träger zugegeben. Die Mischung wird auf 60°C aufgeheizt und die SiH-Komponente so zudosiert, daß 100°C nicht überschritten werden. Es wird 3 Stunden bei 100°C nachgerührt. Nach einer Probe auf vollständigen Umsatz der SiH-Gruppen mit methanolischer KOH-Lösung wird der Überschuß an Allylglycidether durch Ausheizen bis 130°C bei einem Druck von < 10 mbar entfernt.

| Addukt aus Beispiel | Viskosität 23°C [mPas] | Zusammensetzung ber. aus $^1$H-NMR |
|---|---|---|
| 1 | 500 | $T^{Ph}D^*_{11}M_{3,3}$ |
| 2 | 101 | $T^{Ph}D^*_{2,6}M_3$ |
| 3 | 565 | $T^{Ph}{}_2D^*_{13}M_{4,3}$ |
| 4 | 1477 | $T^{Ph}{}_3D^*_{16}M_6$ |

Erläuterung der Abkürzungen:

$T^{Ph}$ =

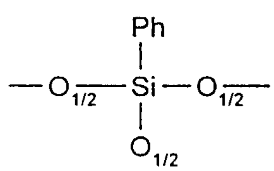

$D^H$ =

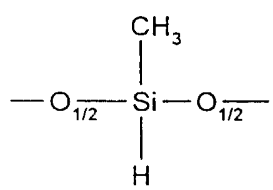

M =

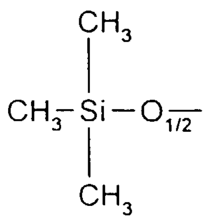

D* =

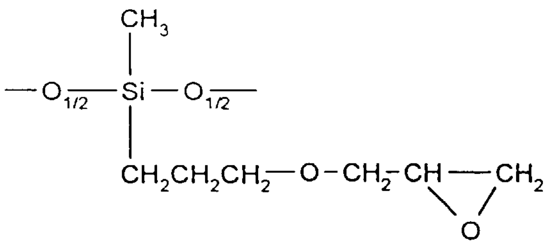

Hauptbestandteil gemäß Beispiel 1

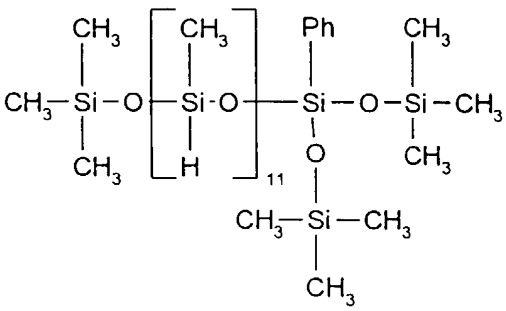

Hauptbestandteil gemäß Beispiel 2

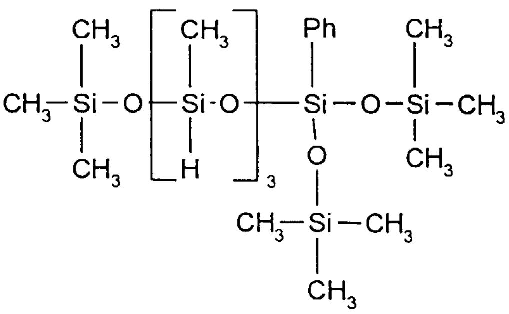

Hauptbestandteil gemäß Beispiel 3

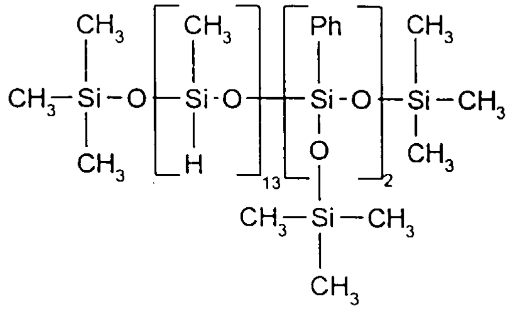

Hauptbestandteil gemäß Beispiel 4

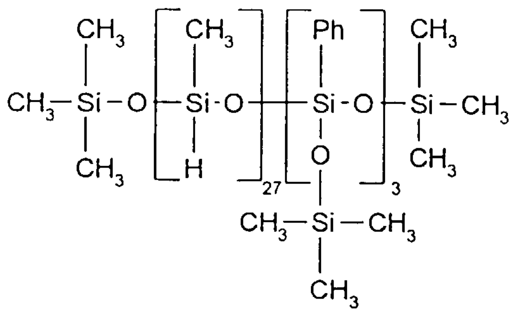

## Patentansprüche

**1.** Epoxigruppen enthaltende Siloxane der Formel 1

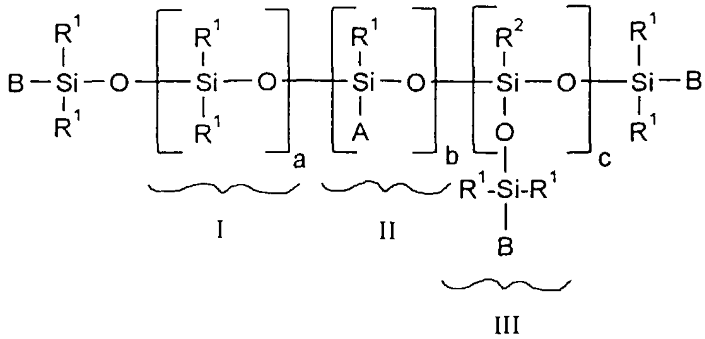

Formel 1

worin

A ein $C_1$-$C_{20}$-Alkylrest mit Epoxigruppen

B $R^1$ oder A

$R^1$, $R^2$ unabhängig voneinander $C_1$-$C_{20}$-Alkyl oder $C_6$-$C_{10}$-Aryl

a null oder eine ganze Zahl von 1-100

b eine ganze Zahl von 1-100

c eine ganze Zahl von 1-5

bedeuten.

2. Mischungen aus aromatischen Polycarbonaten und Siloxanen des Anspruchs 1, die - bezogen auf Gesamtmischung 0,001 bis 2,5 Gew.-% des Siloxans enthalten.

3. Mischungen nach Anspruch 2 enthaltend hochmolekulare, thermoplastische, aromatische Polycarbonate mit $\overline{M}_w$ (Gewichtsmittel des Molekulargewichts) von mindestens 10 000, vorzugsweise von 20 000 bis 300 000, die bifunktionelle Carbonatstruktureinheiten der Formel (I) enthalten,

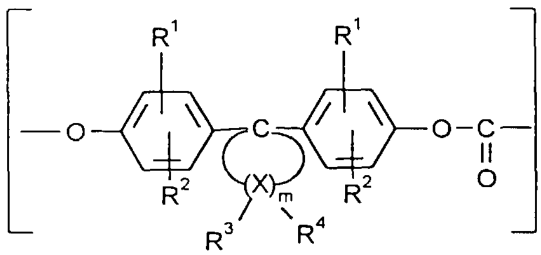 (I)

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4 bis 7, bevorzugt 4 oder 5,

$R^3$ und $R^4$ für jedes X individuell wählbar, unabhängig voneinander Wasserstoff oder $C_1$-$C_6$-Alkyl und

X Kohlenstoff bedeuten,

mit der Maßgabe, daß an mindestens einem Atom X, $R^3$ und $R^4$ gleichzeitig Alkyl bedeuten.

## Claims

1. Siloxanes containing epoxy groups corresponding to the formula 1

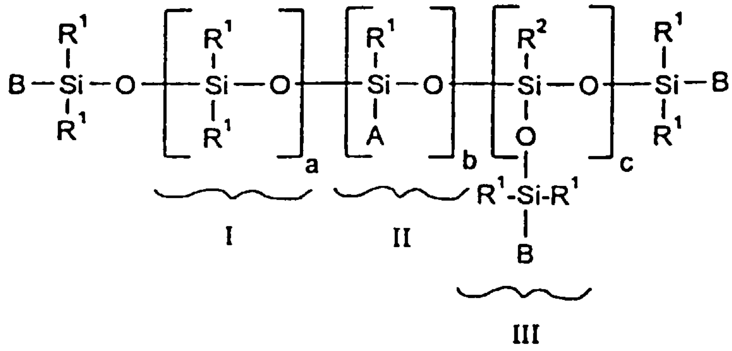

Formula 1

wherein

A means a $C_1$ - $C_{20}$ alkyl radical with epoxy groups

B means $R^1$ or A

$R^1$, $R^2$ independently of one another mean $C_1$-$C_{20}$ alkyl or $C_6$-$C_{10}$ aryl

a means zero or an integer from 1 - 100

b means an integer from 1 - 100

c means an integer from 1 - 5.

**2.** Mixtures of aromatic polycarbonates and siloxanes of claim 1 containing 0.001 to 2.5 wt.% of the siloxane, based on total mixture.

**3.** Mixtures according to claim 2 containing high molecular weight, thermoplastic aromatic polycarbonates with $\overline{M}_w$ (weight-average molecular weight) of at least 10,000, preferably from 20,000 to 300,000, which contain bifunctional carbonate structural units corresponding to the formula (I),

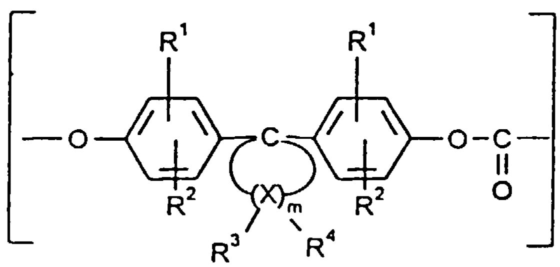

(I)

wherein

$R^1$ and $R^2$ independently of one another mean hydrogen, halogen, preferably chlorine or bromine, $C_1$-$C_8$ alkyl, $C_5$-$C_6$ cycloalkyl, $C_6$-$C_{10}$ aryl, preferably phenyl, and $C_7$-$C_{12}$ aralkyl, preferably phenyl-$C_1$-$C_4$ alkyl, particularly benzyl,

m means an integer from 4 to 7, preferably 4 or 5,

| | |
|---|---|
| $R^3$ and $R^4$ | which may be chosen individually for each X, independently of one another, mean hydrogen or $C_1$-$C_6$ alkyl, and |
| X | means carbon, |

provided that on at least one atom X, $R^3$ and $R^4$ simultaneously mean alkyl.

**Revendications**

**1.** Siloxanes contenant des groupes époxy et répondant à la formule 1

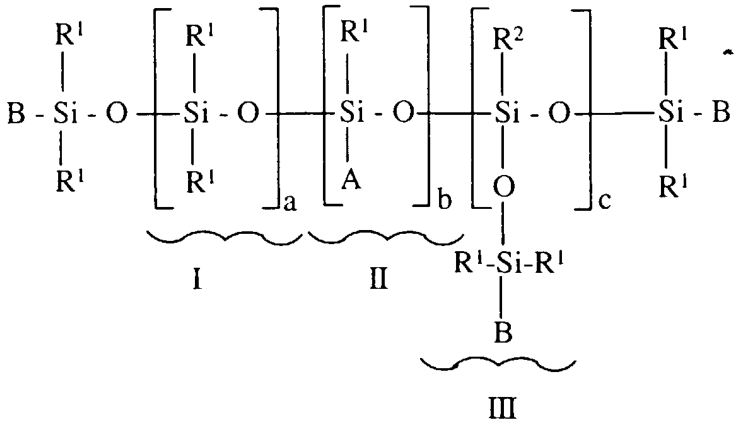

Formule I

| | |
|---|---|
| A | représente un groupe alkyle en $C_1$-$C_{20}$ contenant des groupes époxy, |
| B | représente $R^1$ ou A, |
| $R^1$, $R^2$ | représentent chacun, indépendamment l'un de l'autre, un groupe alkyle en $C_1$-$C_{20}$ ou aryle en $C_6$-$C_{10}$, |
| a | est égal à 0 ou représente un nombre entier allant de 1 à 100, |
| b | est égal à 0 ou représente un nombre entier allant de 1 à 100, |
| c | représente un nombre entier allant de 1 à 5. |

**2.** Mélanges de polycarbonates aromatiques et de siloxanes de la revendication 1 contenant, sur leur poids total, 0,001 à 2,5 % en poids du siloxane.

**3.** Mélanges selon la revendication 2, contenant des polycarbonates aromatiques thermoplastiques à haut poids moléculaire, de poids moléculaire $\overline{M}_w$ (poids moléculaire moyen, moyenne en poids) d'au moins 10 000, de préférence de 20 000 à 300 000, qui contiennent des motifs de structure carbonate bifonctionnels de formule (I)

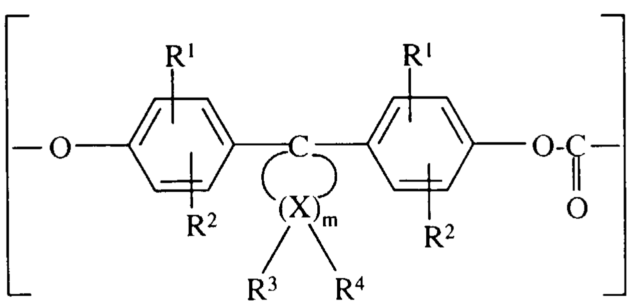

(I)

dans laquelle

| | |
|---|---|
| $R^1$ et $R^2$ | représentent chacun, indépendamment l'un de l'autre, l'hydrogène, un halogène, de préférence le chlore ou le brome, un groupe alkyle en $C_1$-$C_8$, cycloalkyle en $C_5$-$C_6$, aryle en $C_6$-$C_{10}$, de préférence phényle, ou aralkyle en $C_7$-$C_{12}$, de préférence phényl-alkyle en $C_1$-$C_4$, tout spécialement benzyle, |
| m | est un nombre entier allant de 4 à 7 et de préférence égal à 4 ou 5, |
| $R^3$ et $R^4$, | qui sont indépendants pour chacun des atomes X, représentent chacun, indépendamment l'un de l'autre, l'hydrogène ou un groupe alkyle en $C_1$-$C_6$, et |
| X | représente le carbone, |

sous réserve que, sur au moins un atome X, $R^3$ et $R^4$ représentent tous deux des groupes alkyles.